# EUROPEAN PATENT APPLICATION

(11) **EP 3 659 883 A1**
(43) Date of publication of application: **03.06.2020**
(21) Application number: 19211870.1
(22) Date of filing: 27.11.2019
(51) Int. Cl.: B60W 30/09, B60W 30/095

(54) **DRIVING ASSISTANCE APPARATUS**

(30) Priority: 30.11.2018 JP 2018225748
(71) Applicant: TOYOTA JIDOSHA KABUSHIKI KAISHA, Toyota-Shi, Aichi-Ken 471-8571 (JP)
(72) Inventor: KAMATANI, Miyuki, Aichi-ken 471-8571 (JP); SATO, Minami, Aichi-ken 471-8571 (JP); FUJITA, Kazuyuki, Aichi-ken 471-8571 (JP)
(74) Representative: J A Kemp LLP

(57) **Abstract**

A driving assistance apparatus is provided with:
an executor configured to perform an avoidance assistance control when there is an avoidance target (50), a collision with which is to be avoided, so as to avoid the collision between the vehicle (10) and the avoidance target (50);
a first determinator configured to determine whether or not a lateral distance between the avoidance target (50) and a roadway boundary, which is a distance in a lateral direction of the vehicle (10), is greater than a first threshold value (L1, L2), wherein the roadway boundary is a boundary between a roadway on which the vehicle (10) travels and an area outside the roadway in which the avoidance target (50) exists;
and a controller programmed to control the executor to delay timing of starting the avoidance assistance control when the lateral distance is greater than the first threshold value (L1, L2), in comparison with when the lateral distance is less than the first threshold value (L1, L2).

## Description

### BACKGROUND

### 1. Technical Field

Embodiments of the present disclosure relate to a driving assistance apparatus configured to provide driving assistance for a vehicle.

### 2. Description of the Related Art

For this type of apparatus, there is known an apparatus configured to perform a control for avoiding a collision between a vehicle and an obstacle that is ahead of the vehicle (hereinafter referred to as a "avoidance assistance control" as occasion demands). For example, Japanese Patent Application Laid Open No. 2017-095100 (Patent Literature 1) discloses a technology/technique in which when a pedestrian is detected ahead of a vehicle, a steering control and a deceleration control are automatically performed, so that the vehicle decelerates and passes the pedestrian at a distance from the pedestrian.

In the technology/technique described in the Patent Literature 1, an avoidance assistance control for avoiding the pedestrian is performed on condition that a distance between a host vehicle and the pedestrian in a longitudinal direction of the host vehicle is less than a predetermined value. Depending on a position of the pedestrian, however, such an avoidance assistance control may cause a driver of the vehicle to feel uncomfortable. For example, if the pedestrian is extremely close to a white line of a roadway, the driver of the vehicle recognizes a relatively high possibility of a collision with the pedestrian, so that the driver desires the avoidance assistance control to be performed at a relatively early stage. On the other hand, if the pedestrian is far from the white line, the driver of the vehicle determines that the possibility of a collision with the pedestrian is low. Thus, the driver may feel troubled if the avoidance assistance control is performed in the same timing as described above.

### SUMMARY

In view of the aforementioned problem, it is therefore an object of embodiments of the present disclosure to provide a driving assistance apparatus configured to perform the avoidance assistance control in a vehicle.

An aspect of a driving assistance apparatus according to the present disclosure is a driving assistance apparatus provided with: an executor configured to perform an avoidance assistance control when there is an avoidance target, a collision with which is to be avoided, ahead of a vehicle, so as to avoid the collision between the vehicle and the avoidance target; a first determinator configured to determine whether or not a lateral distance between the avoidance target and a roadway boundary, which is a distance in a lateral direction of the vehicle, is greater than a first threshold value, wherein the roadway boundary is a boundary between a roadway on which the vehicle travels and an area outside the roadway in which the avoidance target exists; and a controller programmed to control the executor to delay timing of starting the avoidance assistance control when the lateral distance is greater than the first threshold value, in comparison with when the lateral distance is less than the first threshold value.

### BRIEF DESCRIPTION OF THE DRAWINGS

FIG. 1 is a block diagram illustrating a configuration of a vehicle according to an embodiment;
FIG. 2 is a plan view illustrating an example when there is a pedestrian close to a while line ahead of a vehicle;
FIG. 3 is a plan view illustrating an example when there is a pedestrian far from the while line ahead of the vehicle;
FIG. 4 is a flowchart illustrating a flow of operations of a driving assistance apparatus according to the embodiment;
FIG. 5 is a plan view illustrating a method of setting an assistance operating range in the normal case; and
FIG. 6 is a plan view illustrating a method of setting an assistance operating range when the pedestrian is close.

### DETAILED DESCRIPTION OF THE EMBODIMENT

Hereinafter, a driving assistance apparatus according to an embodiment of the present disclosure will be explained with reference to the drawings.

### <Configuration of Apparatus>

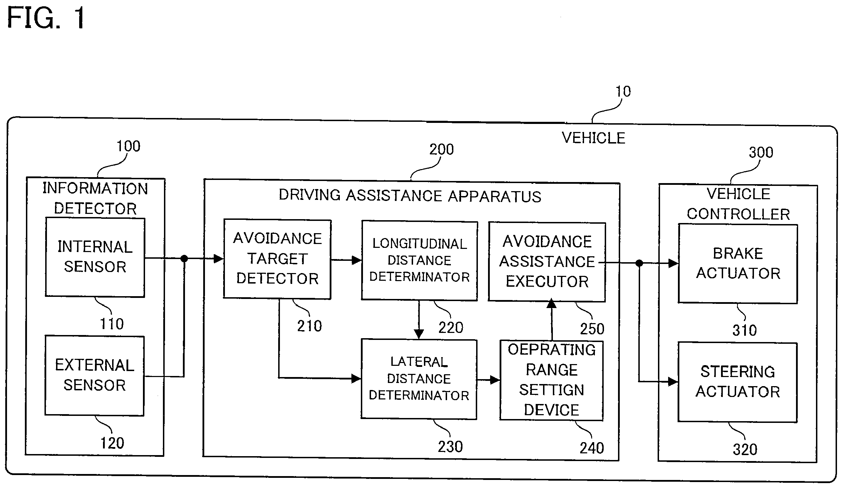

Firstly, an entire configuration of a vehicle on which the driving assistance apparatus according to the embodiment is mounted will be explained with reference to FIG. 1. FIG. 1 is a block diagram illustrating the configuration of the vehicle according to the embodiment.

As illustrated in FIG. 1, a vehicle 10 according to the embodiment is provided with an information detector 100, a driving assistance apparatus 200, and a vehicle controller 300.

The information detector 100 is provided with an internal sensor 110 and an external sensor 120. The internal sensor 110 may include, for example, a vehicle speed sensor, an acceleration sensor, a yaw rate sensor, a steering sensor, or the like, and is configured to detect an internal parameter of the vehicle 10. The external sensor 120 may include, for example, an on-vehicle camera, a radar, a Lidar, or the like, and is configured to detect information about an object (e.g., a pedestrian, a bicycle, etc.) that is in a predetermined range (in other words, in a detectable range of the external sensor 120) near the vehicle 10. Each information detected by the internal sensor 110 and the external sensor 120 may be outputted to the driving assistance apparatus 200.

The driving assistance apparatus 200 is configured to perform a deceleration control and a steering control (which are specifically an automatic deceleration control and an automatic steering control, which are independent of an operation by an occupant), as the avoidance assistance control for avoiding a collision between the vehicle 10 and an object that is ahead of the vehicle 10. The driving assistance apparatus 200 is configured, for example, as an electronic control unit (ECU) mounted on the vehicle 10, and is provided with an avoidance target detector 210, a longitudinal distance determinator 220, a lateral distance determinator 230, an operating range setting device 240, and an avoidance assistance executor 250, as logical processing blocks or physical processing circuits for realizing its functions.

The avoidance target detector 210 is configured to detect an avoidance target that is ahead of the vehicle 10, on the basis of the information detected by the information detector 100 (in other words, the internal sensor 110 and the external sensor 120). The "avoidance target" herein may be a target on which the deceleration control and the steering control are to be performed so as to avoid a collision, and may include, for example, a pedestrian who is near a white line of a roadway on which the vehicle 10 travels, or the like. A detailed explanation of a specific method of detecting the avoidance target will be omitted herein because the existing technologies/techniques can be applied, as occasion demands. Information about the avoidance target detected by the avoidance target detector 210 may be outputted to each of the longitudinal distance determinator 220 and the lateral distance determinator 230.

The longitudinal distance determinator 220 is configured to determine whether or not a longitudinal distance between the vehicle 10 and the avoidance target (i.e., a distance in a longitudinal direction of the vehicle 1) is less than or equal to a predetermined threshold value L1, on the basis of the information about the avoidance target detected by the avoidance target detector 210. The threshold value L1 may be set as a value corresponding to a range in which an automatic brake control (so-called pre crash safety (PCS)) to be performed so as to avoid a collision between the vehicle 10 and an object just before the collision, and may be used to avoid interference between the PCS and the avoidance assistance control according to the embodiment (details of which will be described later). If the longitudinal distance between the vehicle 10 and the avoidance target is equal to the threshold value L1, the longitudinal distance may be treated as being greater than the threshold value L1, or may be treated as being less than the threshold value L1.

The longitudinal distance determinator 220 is further configured to determine whether or not the longitudinal distance between the vehicle 10 and the avoidance target is greater than a predetermined threshold value L2, on the basis of the information about the avoidance target detected by the avoidance target detector 210. The threshold value L2 may be a threshold value for determining whether or not the vehicle 10 and the avoidance target are so far apart that it is hard for an occupant of the vehicle 10 to accurately recognize a lateral distance (i.e., a distance in a lateral direction of the vehicle) to the avoidance target, and an optimum value may be set by previous simulations or the like. If the longitudinal distance between the vehicle 10 and the avoidance target is equal to the threshold value L2, the longitudinal distance may be treated as being greater than the threshold value L2, or may be treated as being less than the threshold value L2. A determination result of the longitudinal distance determinator 220 may be outputted to the lateral distance determinator 230. The longitudinal distance determinator 220 is a specific example of the "second determinator" in Supplementary Notes described later. The threshold value L2 is a specific example of the "second threshold value" in Supplementary Notes described later.

The lateral distance determinator 230 is configured to determine whether or not a lateral distance between the avoidance target and a roadway boundary (i.e., a boundary between the roadway and an area outside the roadway: e.g., a white line, a curb, a difference in level, a sidewalk, a road shoulder, etc.) a distance in a longitudinal direction of the vehicle 1) is greater than a predetermined threshold value W, on the basis of the information about the avoidance target detected by the avoidance target detector 210. The threshold value W may be a threshold value for determining whether or not the lateral distance between the avoidance target and the roadway boundary is large to an extent that the occupant of the vehicle 10 may feel troubled if the avoidance assistance control is performed as usual (or more specifically, whether or not the avoidance target is far from the roadway to an extent that the occupant of the vehicle 10 thinks that the avoidance assistance control is not necessary), and an optimum value may be set by previous simulations or the like. If the avoidance target is inside the roadway boundary (i.e., on a roadway side), the lateral distance may be calculated as a negative value. If the lateral distance is equal to the threshold value W, the lateral distance may be treated as being greater than the threshold value W, or may be treated as being less than the threshold value W. A determination result of the lateral distance determinator 230 may be outputted to the operating range setting device 240. The lateral distance determinator 230 is a specific example of the "first determinator" in Supplementary Notes described later. The threshold value W is a specific example of the "first threshold value" in Supplementary Notes described later.

The operating range setting device 240 is configured to set an "assistance operating range" for determining the start timing of the avoidance assistance control. Specifically, the operating range setting device 240 is configured to change magnitude of the assistance operating range on the basis of the determination result of the lateral distance determinator 230. A method of setting the assistance operating range and a method of changing the magnitude of the assistance operating range will be explained in detail later. Information about the assistance operating range determined by the operating range setting device 240 may be outputted to the avoidance assistance executor 250. The operating range setting device 240 is a specific example of the "controller" in Supplementary Notes described later.

The avoidance assistance executor 250 is configured to perform the avoidance assistance control (i.e., the deceleration control and the steering control) by controlling the operation of the vehicle controller 300. The avoidance assistance executor 250 may perform the avoidance assistance control when the vehicle 10 enters the assistance operating range, which is set by the operating range setting device 240. The assistance operating range may be used to determine the timing of starting the avoidance assistance control of the avoidance assistance executor 250, and may not be used to determine the timing of ending the avoidance assistance control. In other words, it is not that the avoidance assistance control is performed only in a period in which the vehicle 10 is in the assistance operating range. Thus, in some cases, the avoidance assistance control may not be ended, even if the vehicle 10 enters the assistance operating range to start the avoidance assistance control and the vehicle 10 then exits from the assistance operating range. The avoidance assistance executor 250 may end the avoidance assistance control at a time point at which it can be determined that it is no longer necessary to perform the avoidance assistance control, such as, for example, at a time at which the vehicle 10 passes the avoidance target. The avoidance assistance executor 250 is a specific example of the "executor" in Supplementary Notes described later.

The vehicle controller 300 is provided with a brake actuator 310 and a steering actuator 320. The brake actuator 310 is configured to control deceleration of the vehicle 10 by controlling the operation of a brake of the vehicle 10. The steering actuator 320 is configured to control the steering of the vehicle 10 by controlling the operation of a steering wheel of the vehicle 10.

### <Technical Problem>

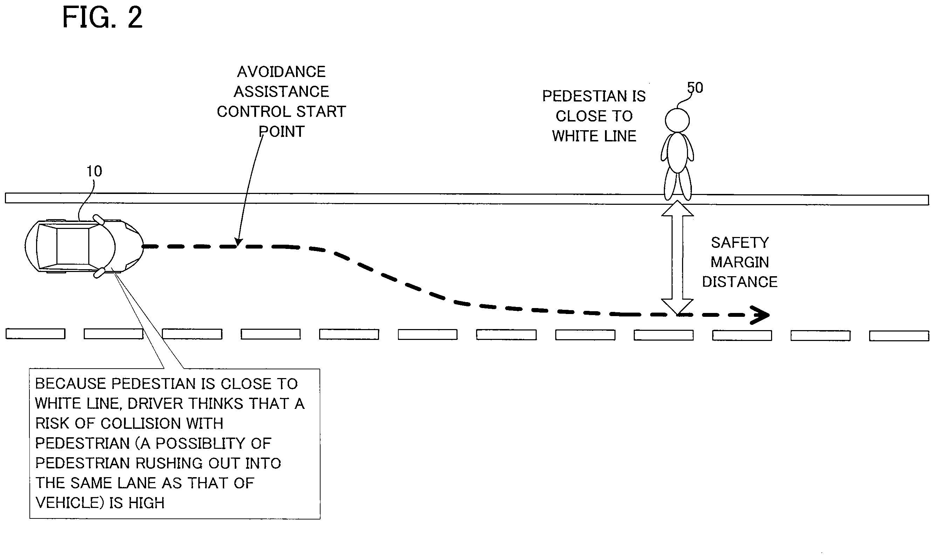

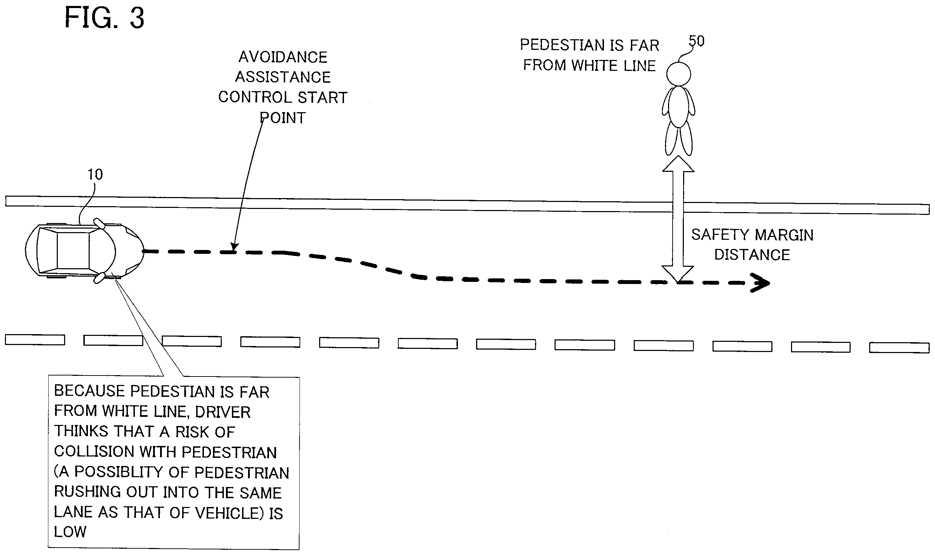

Next, a technical problem that can occur in performing the avoidance assistance control will be explained with reference to FIG. 2 and FIG. 3. FIG. 2 is a plan view illustrating an example when there is a pedestrian close to a while line ahead of a vehicle. FIG. 3 is a plan view illustrating an example when there is a pedestrian far from the while line ahead of the vehicle. An operation example explained below is associated with a comparative example, which is different from the driving assistance apparatus according to the embodiment.

As illustrated in FIG. 2, it is assumed that a pedestrian 50, which is the avoidance target, is detected ahead in a distance of travel of the vehicle 10. In this case, in the vehicle 10, the avoidance assistance control for avoiding a collision with the pedestrian 50 is performed. Specifically, when the vehicle 10 reaches a start point of the avoidance assistance control (e.g., a point at which a longitudinal distance to the pedestrian 50 is a predetermined distance), the deceleration of the vehicle 10 is started, and the steering control is performed so that a lateral distance to the pedestrian 50 is a safety margin distance (i.e., a distance set to safely pass by the pedestrian) (refer to a dashed line in FIG. 2).

Here, in particular, in the example illustrated in FIG. 2, the pedestrian 50 is extremely close to the white line. In this case, the occupant of the vehicle 10 recognizes a high possibility of a collision between the vehicle 10 and the pedestrian 50 if the vehicle 10 goes straight without a change. Thus, even if the avoidance assistance control is started from an avoidance assistance control start point, the occupant does not particularly feel troubled.

On the other hand, in the example illustrated in FIG. 3, the pedestrian 50 is far from the white line. In this case, the occupant of the vehicle 10 recognizes a low possibility of a collision between the vehicle 10 and the pedestrian 50 if the vehicle 10 goes straight without a change. However, the avoidance assistance control start point (in other words, the timing of starting the avoidance assistance control) is the same as that in the example in FIG. 2, even though a steering amount of the avoidance assistance control is less than that in the example in FIG. 2. As a result, the occupant of the vehicle 10 may feel troubled due to the start of the avoidance assistance control. More specifically, even if an appropriate avoidance assistance control is performed in accordance with a positional relation between the vehicle 10 and the pedestrian 50, the occupant of the vehicle 10 may think that an unnecessary avoidance assistance control is performed.

As described above, if the avoidance assistance control is started only on the basis of a distance between the vehicle 10 and the pedestrian 50, the occupant of the vehicle 10 may feel troubled. The driving assistance apparatus 200 according to the embodiment may perform the operation explained below (specifically, an operation of changing the magnitude of the assistance operating range in accordance with circumstances) so as to solve such a technical problem.

### <Explanation of Operation>

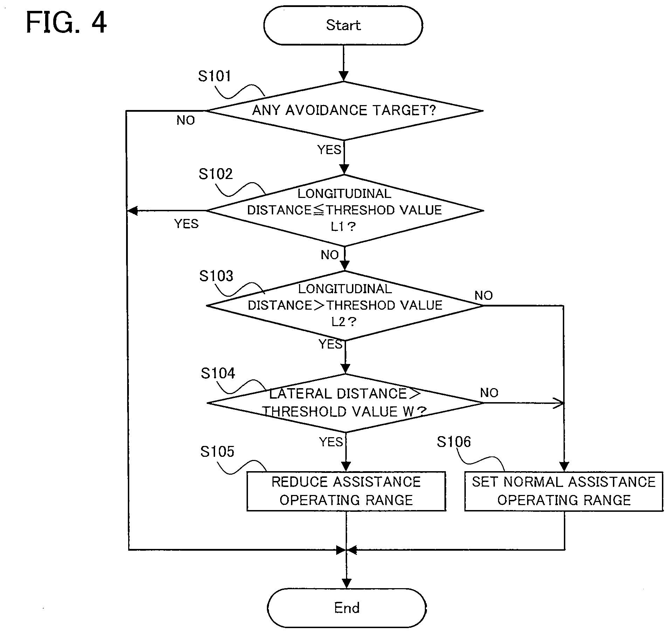

Next, a flow of operations of the driving assistance apparatus 200 according to the embodiment will be explained with reference to FIG. 4. FIG. 4 is a flowchart illustrating the flow of the operations of the driving assistance apparatus according to the embodiment.

As illustrated in FIG. 4, in operation of the driving assistance apparatus 200 according to the embodiment, the avoidance target detector 210 firstly determines whether or not there is an avoidance target ahead of the vehicle 10 (step S101). If it is determined that there is no avoidance target (the step S101: NO), the subsequent process is omitted, and a series of steps is ended. In this case, the driving assistance apparatus 200 may start the step S101 after a predetermined period.

If it is determined that there is an avoidance target (the step S101: YES), the longitudinal distance determinator 220 determines whether or not the longitudinal distance between the vehicle 10 and the avoidance target is less than or equal to the threshold value L1 (step S102). If it is determined that the longitudinal distance between the vehicle 10 and the avoidance target is less than or equal to the threshold value L1 (the step S102: YES), the subsequent process is omitted so as to avoid the interference with the PCS, and a series of steps is ended without performing the avoidance assistance control. In this case, a collision between the vehicle 10 and the avoidance target is avoided by the PDS, which is separately performed.

If it is determined that the longitudinal distance between the vehicle 10 and the avoidance target is not less than or equal to the threshold value L1 (the step S102: NO), it can be determined that a current position of the vehicle 10 is not in an operating range of the PCS and that there is no interference between the PCS and the avoidance assistance control according to the embodiment. In this case, the longitudinal distance determinator 220 further determines whether or not the longitudinal distance between the vehicle 10 and the avoidance target is greater than the threshold value L2 (step S103).

If it is determined that the longitudinal distance between the vehicle 10 and the avoidance target is greater than the threshold value L2 (the step S103: YES), the lateral distance determinator 230 determines whether or not the lateral distance between the avoidance target and the roadway boundary is greater than the threshold value W (step S104).

If it is determined that the longitudinal distance between the vehicle 10 and the avoidance target is not greater than the threshold value L2 (the step S103: NO), or if it is determined that the lateral distance between the avoidance target and the roadway boundary is not greater than the threshold value W (the step S104: NO), then, the operating range setting device 240 sets the assistance operating range as usual for the avoidance target (step S106). On the other hand, if it is determined that the lateral distance between the avoidance target and the roadway boundary is greater than the threshold value W (the step S104: YES), the operating range setting device 240 sets the assistance operating range that is reduced, for the avoidance target (step S105).

### <Example of Setting Assistance operating Range>

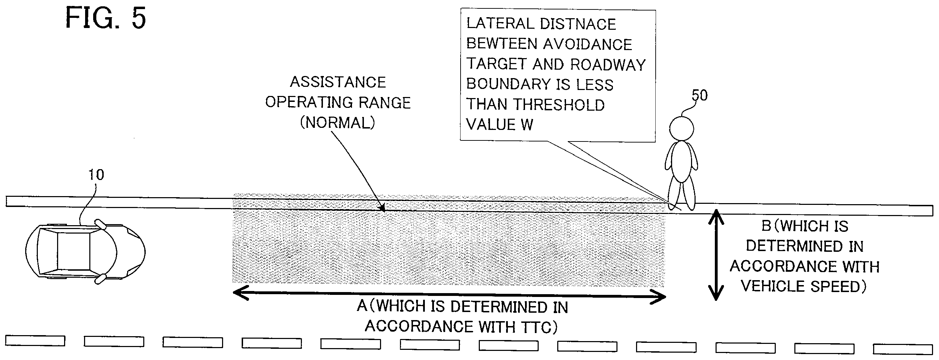

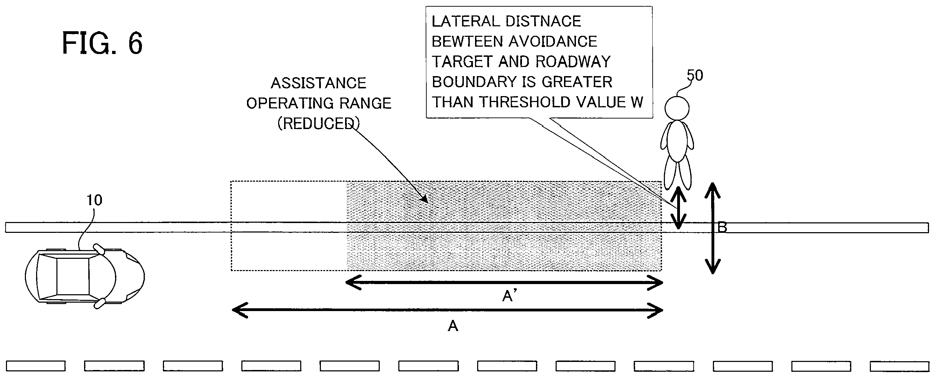

Next, a specific example of setting the assistance operating range described above (i.e., the assistance operating range in the normal case and the assistance operating range when it is reduced) will be explained with reference to FIG. 5 and FIG. 6. FIG. 5 is a plan view illustrating a method of setting the assistance operating range in the normal case. FIG. 6 is a plan view illustrating a method of setting the assistance operating range when the pedestrian is close.

As illustrated in FIG. 5, it is assumed that the pedestrian 50 and the white line are close in distance and that the lateral distance between the avoidance target and the roadway boundary is determined to be not greater than the threshold value W (the step S104 in FIG. 4: NO). In this case, the operating range setting device 240 may set the assistance operating range as usual, with the pedestrian 50 as a starting point. The assistance operating range may be set, for example, as a rectangular range with a length A from the pedestrian 50 to the vehicle 10 side and with a width B from the pedestrian 50 to the roadway side (refer to a hatched part in FIG. 5). The width B may be a distance corresponding to the safety margin distance in FIG. 2 and FIG. 3.

The length A of the assistance operating range in the normal case may be set on the basis of a time to collision (TTC) between the vehicle 10 and the avoidance assistance target. For example, the length A may be set as a length corresponding to TTC=4.5 seconds. On the other hand, the width B of the assistance operating range in the normal case may be set to be larger with increasing vehicle speed of the vehicle 10. For example, the width B may be set as a width of about 0 to 1.5 m in accordance with the vehicle speed.

On the other hand, as illustrated in FIG. 6, it is assumed that the pedestrian 50 and the white line are distant and that the lateral distance between the avoidance target and the roadway boundary is determined to be greater than the threshold value W (the step S104 in FIG. 4: YES). In this case, the operating range setting device 240 may set the assistance operating range to be A', which is less than the length A in the normal case. As described above, when the pedestrian 50 is far from the roadway, the length of the assistance operating range may be reduced.

### <Technical Effect>

Next, a technical effect obtained by the driving assistance apparatus 200 according to the embodiment will be explained.

As explained with reference to FIG. 1 to FIG. 6, according to the driving assistance apparatus 200 in the embodiment, the assistance operating range varies depending on the lateral distance between the avoidance target and the roadway boundary. Specifically, when the avoidance target is relatively close to the roadway boundary, the assistance operating range may be set as usual, whereas when the avoidance target is relatively far from the roadway boundary, the assistance operating range may be set to have a length that is less than usual.

When the length of the assistance operating range is reduced, the vehicle 10 enters the assistance operating range in delayed timing. As a result, the avoidance assistance control is started in delayed timing. As explained above, if the avoidance assistance control is performed in relatively early timing even though the avoidance target is far from the roadway boundary, the occupant of the vehicle 10 may feel troubled to the avoidance assistance control. In the embodiment, however, if the lateral distance between the avoidance target and the roadway boundary is greater than the threshold value W, the assistance operating range is reduced, by which the start timing of the avoidance assistance control is delayed. It is thus possible to prevent the occupant of the vehicle 10 from feeling troubled. To what extent the start timing of the avoidance assistance control is delayed (in other words, to what extent the assistance operating range is reduced) can be determined by obtaining optimum timing that allows the occupant not to feel troubled, for example, from previous simulations or the like.

Moreover, according to the driving assistance apparatus 200 in the embodiment, it is determined that the lateral distance between the avoidance target and the roadway boundary is greater than the threshold value W only when the longitudinal distance between the vehicle 10 and the avoidance target is greater than the threshold value L2. In other words, if the longitudinal distance between the vehicle 10 and the avoidance target is less than the threshold value L2, the start timing of the avoidance assistance control is set as usual, regardless of the lateral distance between the avoidance target and the roadway boundary.

As described above, by determining whether or not the longitudinal distance between the vehicle 10 and the avoidance target is greater than the threshold value L2, it is possible to prevent an unnecessary change in the start timing of the avoidance assistance control. Specifically, if the longitudinal distance between the vehicle 10 and the avoidance target is not greater than the threshold value L2, the occupant of the vehicle 10 and the avoidance target are relatively close in position, so that the occupant of the vehicle 10 can accurately recognize the possibility of a collision between the vehicle 10 and the avoidance target. Thus, even if the avoidance assistance control is performed in the normal timing, the occupant of the vehicle 10 may not feel troubled. On the other hand, if the longitudinal distance between the vehicle 10 and the avoidance target is greater than the threshold value L2, the occupant of the vehicle 10 and the avoidance target are relatively distant, so that the occupant of the vehicle 10 hardly accurately recognizes the possibility of a collision between the vehicle 10 and the avoidance target. Thus, in this case, a technical effect that is to prevent a trouble about the avoidance assistance control is remarkably demonstrated.

The embodiment exemplifies that the length of the assistance operating range is changed, but the start timing of the avoidance assistance control may be also changed in different ways. For example, the start timing calculated from the TTC between the vehicle 10 and the avoidance target may be directly delayed.

Moreover, in the embodiment, the start timing of the avoidance assistance control is changed at two stages in accordance with the lateral distance between the avoidance target and the roadway boundary (i.e., depending on whether or not the lateral distance is greater than the threshold value W), but the start timing may be more finely changed. For example, the start timing may be changed to be gradually delayed as the lateral distance between the avoidance target and the roadway boundary increases.

### <Supplementary Notes>

Various aspects of embodiments of the present disclosure derived from the embodiment explained above will be explained hereinafter.

### (Supplementary Note 1)

A driving assistance apparatus described in Supplementary Note 1 is provided with: an executor configured to perform an avoidance assistance control when there is an avoidance target, a collision with which is to be avoided, ahead of a vehicle, so as to avoid the collision between the vehicle and the avoidance target! a first determinator configured to determine whether or not a lateral distance between the avoidance target and a roadway boundary, which is a distance in a lateral direction of the vehicle, is greater than a first threshold value, wherein the roadway boundary is a boundary between a roadway on which the vehicle travels and an area outside the roadway in which the avoidance target exists; and a controller programmed to control the executor to delay timing of starting the avoidance assistance control when the lateral distance is greater than the first threshold value, in comparison with when the lateral distance is less than the first threshold value.

According to the driving assistance apparatus described in Supplementary Note 1, when the lateral distance between the avoidance target and the roadway boundary is greater than the first threshold value, the timing of starting the avoidance assistance control is controlled to be delayed. By this, the avoidance assistance control is performed in relatively early timing on the avoidance target that is close to the roadway boundary, whereas the avoidance assistance control is performed in relatively delayed timing on the avoidance target that is far from the roadway boundary.

According to studies by the present inventors, it is found that a driver of the vehicle may recognize the possibility of a collision with the avoidance target on the basis of a relative positional relation between the avoidance target and the roadway boundary (e.g., a white line, etc.). Thus, by changing the start timing of the avoidance assistance control in accordance with the lateral distance between the avoidance target and the roadway boundary, the avoidance assistance control can be started in the timing that is close to the feeling of the driver. For example, by preventing the avoidance assistance control from being performed in relatively early timing on the avoidance target that is far from the roadway boundary, then, it is possible to prevent the driver of the vehicle from feeling troubled about the avoidance assistance control.

### (Supplementary Note 2)

A driving assistance apparatus described in Supplementary Note 2 is further provided with a second determinator configured to determine whether or not a longitudinal distance between the vehicle and the avoidance target, which is a distance in a longitudinal direction of the vehicle, is greater than a second threshold value, and the first determinator is configured to determine whether or not the lateral distance is greater than the first threshold value when the longitudinal distance is greater than the second threshold value.

According to the driving assistance apparatus described in Supplementary Note 2, when the longitudinal distance between the vehicle and the avoidance target is greater than the second threshold value, it is determined whether or not the lateral distance between the avoidance target and the roadway boundary is greater than the first threshold value. In other words, when the longitudinal distance between the vehicle and the avoidance target is greater than the second threshold value, the start timing of the avoidance assistance control is controlled.

Here, if the longitudinal distance between the vehicle and the avoidance target is large to a certain extent (i.e., if the vehicle and the avoidance target are significantly distant in the longitudinal direction), it is hard for the driver of the vehicle to accurately recognize the possibility of a collision with the avoidance target by direct visual checking or the like. In this case, the driver of the vehicle tends to determine the possibility of a collision by using the relative positional relation between the avoidance target and the roadway boundary, which is close to the avoidance target. Thus, if the start timing of the avoidance assistance control is controlled when the longitudinal distance between the vehicle and the avoidance target is greater than the second threshold value, as described above, then, the technical effect is demonstrated, more remarkably.

### (Supplementary Note 3)

In a driving assistance apparatus described in Supplementary Note 3, the executor is configured to start the avoidance assistance control on condition that the vehicle enters an assistance operating range, which is set with the avoidance target as a starting point, and the controller is programmed to control the executor to reduce the assistance operating range in a longitudinal direction of the vehicle when the lateral distance is greater than the first threshold value, in comparison with when the lateral distance is less than the first threshold value.

According to the driving assistance apparatus described in Supplementary Note 3, the start timing of the avoidance assistance control can be controlled by changing the size in the longitudinal direction of the assistance operating range.

The present disclosure may be embodied in other specific forms without departing from the spirit or essential characteristics thereof. The present embodiments and examples are therefore to be considered in all respects as illustrative and not restrictive, the scope of the disclosure being indicated by the appended claims rather than by the foregoing description and all changes which come in the meaning and range of equivalency of the claims are therefore intended to be embraced therein.

## Claims

1. A driving assistance apparatus (200) comprising:
an executor (250) configured to perform an avoidance assistance control when there is an avoidance target (50), a collision with which is to be avoided, ahead of a vehicle (10), so as to avoid the collision between the vehicle (10) and the avoidance target (50);
a first determinator (230) configured to determine whether or not a lateral distance between the avoidance target (50) and a roadway boundary, which is a distance in a lateral direction of the vehicle (10), is greater than a first threshold value (W), wherein the roadway boundary is a boundary between a roadway on which the vehicle (10) travels and an area outside the roadway in which the avoidance target (50) exists; and
a controller (240) programmed to control said executor (250) to delay timing of starting the avoidance assistance control when the lateral distance is greater than the first threshold value (W), in comparison with when the lateral distance is less than the first threshold value (W).

2. The driving assistance apparatus (200) according to claim 1, wherein
said driving assistance apparatus (200) further comprises a second determinator (220) configured to determine whether or not a longitudinal distance between the vehicle (10) and the avoidance target (50), which is a distance in a longitudinal direction of the vehicle (10), is greater than a second threshold value (L2), and
said first determinator (230) is configured to determine whether or not the lateral distance is greater than the first threshold value (W) when the longitudinal distance is greater than the second threshold value (L2).

3. The driving assistance apparatus (200) according to claim 1 or 2, wherein
said executor (250) is configured to start the avoidance assistance control on condition that the vehicle (10) enters an assistance operating range, which is set with the avoidance target (50) as a starting point, and
said controller (240) is programmed to control said executor (250) to reduce the assistance operating range in a longitudinal direction of the vehicle (10) when the lateral distance is greater than the first threshold value (W), in comparison with when the lateral distance is less than the first threshold value (W).
